(19) Europäisches Patentamt
European Patent Office
Office européen des brevets

(11) **EP 2 538 238 B1**

(12) **EUROPÄISCHE PATENTSCHRIFT**

(45) Veröffentlichungstag und Bekanntmachung des Hinweises auf die Patenterteilung:
**13.11.2013 Patentblatt 2013/46**

(21) Anmeldenummer: **11450079.6**

(22) Anmeldetag: **21.06.2011**

(51) Int Cl.:
*G01S 7/41* (2006.01)     *G01S 13/91* (2006.01)
*G01S 17/88* (2006.01)     *G01S 13/58* (2006.01)
*G08G 1/04* (2006.01)     *G08G 1/01* (2006.01)

(54) **Vorrichtung und Verfahren zur Detektion von Rädern**

Device and method for detecting wheels

Dispositif et procédé destinés à la détection de roues

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.12.2012 Patentblatt 2012/52**

(73) Patentinhaber: **Kapsch TrafficCom AG**
**1120 Wien (AT)**

(72) Erfinder: **Nagy, Oliver**
**1190 Wien (AT)**

(74) Vertreter: **Weiser, Andreas**
**Patentanwalt**
**Kopfgasse 7**
**1130 Wien (AT)**

(56) Entgegenhaltungen:
**DE-A1-102008 037 233**

**Beschreibung**

Die vorliegende Erfindung betrifft ein Verfahren zur Detektion von Rädern eines Fahrzeugs, das auf einer Fahrbahn in einer Fahrtrichtung fährt und dessen Räder von der Fahrzeugkarosserie nach unten vorragen und auf Höhe der Fahrzeugkarosserie zumindest teilweise seitlich freiliegen.

Das Detektieren von Fahrzeugrädern ist bei zahlreichen Anwendungen von Interesse. So kann aus dem Erkennen von Rädern mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodass das Detektieren von Rädern (Radachsen) auch eine wichtige Grundlage für Straßenmaut- oder Parkgebührensysteme sein kann.

Aus der DE 10 2008 037 233 A1 ist es bekannt, Räder eines sich bewegenden Fahrzeugs aufgrund ihrer gegenüber dem restlichen Fahrzeug unterschiedlichen horizontalen Komponente der Tangentialgeschwindigkeit, die eine entsprechende Doppler-Frequenzverschiebung eines Radar-Messstrahls bewirkt, zu detektieren. Dazu wird ein Radar-Geschwindigkeitsmesser verwendet, welcher mit einer Radar-Strahlungskeule den unteren Bereich passierender Fahrzeuge bestrahlt und aus dem zurückerhaltenen Empfangsfrequenzgemisch ein einziges Geschwindigkeitsmesssignal mittelt, das an den Orten der Räder Signalmaxima zeigt. Eine automatische Detektion solcher Maxima in einem Signalverlauf erfordert eine signalanalytische Extremwertsuche und ist dementsprechend aufwändig. Darüber hinaus können z.B. Lücken zwischen einem Zugfahrzeug und seinem Anhänger Signalminima und damit zwischenliegende "falsche" Maxima vortäuschen, welche zu einer fehlerhaften Raddetektion führen.

Die Erfindung setzt sich zum Ziel, Verfahren und Vorrichtungen zur Raddetektion zu schaffen, welche einfacher realisierbar sind als die bekannten Lösungen.

Dieses Ziel wird in einem ersten Aspekt der Erfindung mit einem Verfahren erreicht, das sich auszeichnet durch die Schritte

Aussenden eines gebündelten elektromagnetischen Messstrahls mit einem bekannten zeitlichen Verlauf seiner Frequenz von der Seite der Fahrbahn her auf einen Bereich vorgegebener Höhe über der Fahrbahn und schräg zur Fahrtrichtung, wobei der Messstrahl so gebündelt ist, dass sein Öffnungswinkel < 1° ist oder sein Auftreffbereich auf dem Fahrzeug einen maximalen Durchmesser < 5 cm, bevorzugt < 2 cm, hat,

Empfangen des von einem passierenden Fahrzeug reflektierten Messstrahls und Aufzeichnen des zeitlichen Verlaufs seiner Frequenz relativ zum bekannten Verlauf, und

Detektieren eines innerhalb des Zeitraums der Passage der Fahrzeugkarosserie auftretenden Rechteckimpulses im aufgezeichneten Verlauf als Rad.

Die Erfindung beruht auf der Erkenntnis, dass die Horizontalkomponente der Tangentialgeschwindigkeit eines sich drehenden Rades auf einer bestimmten vorgegebenen Höhe während der gesamten Passage des Rades - d.h. wenn das Rad auf dieser Höhe "geschnitten" wird - *konstant* bleibt und - soferne das Rad nicht gerade auf Höhe seiner Achse getroffen wird - von der Karosseriegeschwindigkeit verschieden ist, sodass eine einfache Rechteckimpulsdetektion genügt, um ein drehendes Rad sicher zu detektieren. Dazu wird ein gebündelter Messstrahl eingesetzt, um einen möglichst kleinen Auftreff- bzw. Messpunkt auf der Fahrzeugkarosserie bzw. dem sich drehenden Rad zu erzeugen. Ein möglichst kleiner Auftreff- bzw. Messpunkt erlaubt die Vernachlässigung von anderen Messeinflüssen, wie sie beispielsweise bei der Messung des seitlichen Projektions-Anteils des Fahrzeug-Bewegungsvektors auftreten: Ein zu großer Auftreff- bzw. Messpunkt würde durch die unterschiedlichen Projektionswinkel zu einer Verbreiterung des Frequenzbereichs im Empfangssignal führen. Diese Bündelung kann beispielsweise mit Hilfe eines Laserstrahls als Messstrahl erreicht werden oder durch extrem hochfrequente Radarstrahlen, bevorzugt im Bereich von über 70 GHz, wie sie z.B. als Langstrecken-Radarsensoren im Fahrzeugbereich für Kollisions- oder Spurwarnassistenten Verwendung finden: Derartig hochfrequente Radarstrahlen können mit entsprechenden Richtantennen, Antennenarrays oder Radarlinsen stark gebündelt werden, sodass ihr Auftreffbereich auf der Karosserie bzw. dem Rad einen Durchmesser von wenigen Zentimetern hat.

Unter dem Begriff "gebündelter" Messstrahl wird in der vorliegenden Beschreibung demgemäß ein Messstrahl verstanden, der eine Strahlaufweitung (Öffnungswinkel) von wenigen Grad hat, bevorzugt < 1° (entspricht < 0,00024 sr), sodass über die Entfernung zwischen Lidar- bzw. Radargerät und abgetastetem Fahrzeug ein Auftreffbereich auf dem Fahrzeug mit einem maximalen Durchmesser im Zentimeterbereich erreicht wird, bevorzugt < 5 cm, besonders bevorzugt < 2 cm.

Die Detektion des Rechteckimpulses im aufgezeichneten Empfangsfrequenzverlauf lässt sich auf besonders einfache Weise dadurch erreichen, dass zwei aufeinanderfolgende, abwechselnde Frequenzsprünge, zwischen denen eine im Wesentlichen konstante Frequenz herrscht, detektiert werden.

In einem zweiten Aspekt schafft die Erfindung eine Vorrichtung zur Detektion von Rädern eines Fahrzeugs, das auf einer Fahrbahn in einer Fahrtrichtung fährt und dessen Räder von der Fahrzeugkarosserie nach unten vorragen und auf Höhe der Fahrzeugkarosserie zumindest teilweise seitlich freiliegen, und die gekennzeichnet ist durch:

ein Doppler-Lidar- oder -Radargerät, das einen gebündelten elektromagnetischen Messstrahl mit einem bekannten zeitlichen Verlauf seiner Frequenz auf ein Ziel aussendet und den zeitlichen Verlauf der Frequenz des vom Ziel reflektierten Messstrahls relativ zum bekannten Verlauf aufzeichnet,

wobei der Messstrahl von der Seite der Fahrbahn her auf einen Bereich vorgegebener Höhe über der Fahrbahn und schräg zur Fahrtrichtung orientiert ist und so gebündelt ist, dass sein Öffnungswinkel < 1° ist oder sein Auftreffbereich auf dem Fahrzeug einen maximalen Durchmesser < 5 cm, bevorzugt < 2 cm, hat, und

eine nachgeordnete Auswerteeinrichtung, welche einen innerhalb des Zeitraums der Passage einer Fahrzeugkarosserie auftretenden Rechteckimpuls im aufgezeichneten Verlauf als Rad detektiert.

Hinsichtlich der Vorteile der erfindungsgemäßen Vorrichtung wird auf die obigen Ausführungen zum erfindungsgemäßen Verfahren verwiesen.

Weitere Merkmale und Vorteile des Verfahrens und der Vorrichtung der Erfindung ergeben sich aus der nachfolgenden Beschreibung eines bevorzugten Ausführungsbeispiels unter Bezugnahme auf die begleitenden Zeichnungen, in denen zeigt:

Fig. 1 eine der Vorrichtung der Erfindung in einer schematischen Perspektivansicht;
Fig. 2 mehrere beispielhafte Abtastverläufe eines gebündelten Messstrahls an einem passierenden Fahrzeug;
Fig. 3 Zeitdiagramme der ermittelten Empfangsfrequenz- bzw. Geschwindigkeitsverläufe zu den Abtastverläufen von Fig. 2; und
Fig. 4 die Geschwindigkeitsverläufe an einem sich drehenden Rad im Detail.

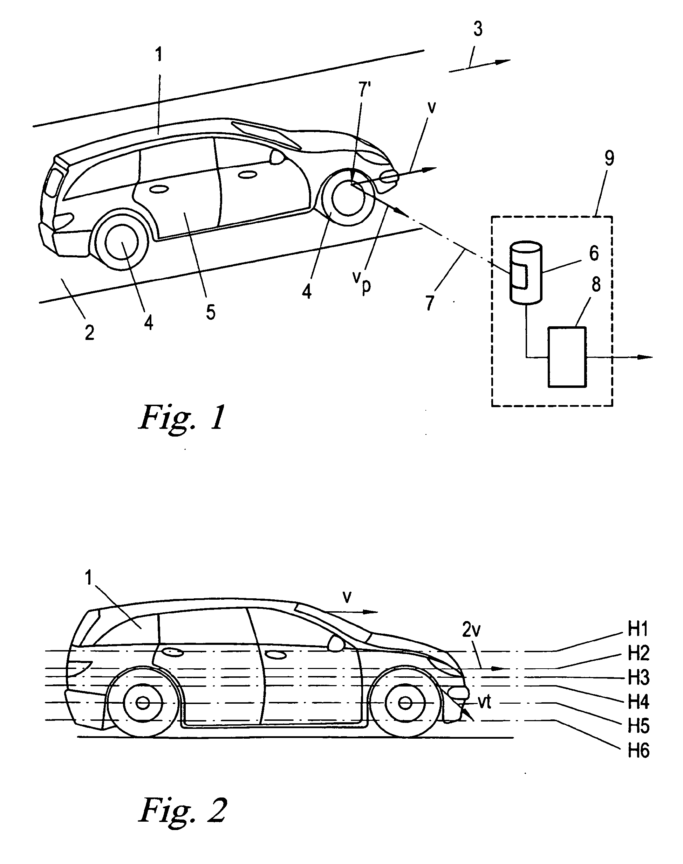

In Fig. 1 bewegt sich ein Fahrzeug 1 auf einer Fahrbahn 2 in einer Fahrtrichtung 3. Das Fahrzeug 1 besitzt Räder 4, welche nach unten über die Karosserie 5 des Fahrzeugs 1 vorragen und dabei - zumindest teilweise - an den Seiten der Karosserie in Ausnehmungen derselben freiliegen, d.h. von der Seite her sichtbar sind.

Ein Doppler-Lidar- oder Radargerät 6 sendet einen gebündelten Lidar- oder Radar-Messstrahl 7 schräg zur Fahrtrichtung 3 von der Seite der Fahrbahn 2 her knapp über die Fahrbahnoberfläche aus, sodass der Messstrahl 7 ein passierendes Fahrzeug 1 etwa im Bereich seiner Räder 4 trifft.

Das Doppler-Lidar- bzw. Radargerät 6 wertet, wie in der Technik bekannt, die Empfangsfrequenz des vom Fahrzeug 1 bzw. seinen Rädern 4 reflektierten Messstrahls 7 aus, wobei aus der dopplereffektbedingten Frequenzverschiebung zwischen ausgesandtem und reflektiertem Messstrahl 7 die in Richtung des Messstrahls 7 liegende (projizierte) Komponente $v_p$ der Geschwindigkeit v des Fahrzeugs 1 bzw. der Tangentialgeschwindigkeit $v_t$ (Fig. 2) des Rades 4 am Auftreffpunkt 7' des Messstrahls 7 ermittelt werden kann. In weiterer Folge können aus dieser Information die Räder 4 des Fahrzeugs 1 detektiert werden, wie später noch ausführlicher erläutert wird. Zu diesem Zweck ist dem Gerät 6 auch eine Auswerteeinrichtung 8 nachgeschaltet, welche die entsprechenden Auswertungen der Empfangsfrequenz des Messstrahls 7 vornimmt. Lidar/Radar-Gerät 6 und Auswerteeinrichtung 8 bilden somit zusammen eine Vorrichtung 9 zur Detektion von Rädern 4 eines Fahrzeugs 1.

Das Doppler-Lidar/Radar-Gerät 6 kann an sich von jeder in der Technik bekannten Art sein, sei es mit einem kontinuierlichen, modulierten oder einem gepulsten Messstrahl 7. Bei einem kontinuierlichen Messstrahl 7 kann eine Dopplerfrequenzverschiebung zwischen den Eigenfrequenzen ("Trägerfrequenzen") des ausgesandten und des reflektierten Messstrahl 7 z.B. durch Interferenzmessung ermittelt werden. Bei einem gepulsten oder modulierten Messstrahl kann eine Dopplerverschiebung zwischen den Impulsraten bzw. Modulationsfrequenzen des ausgesandten und des reflektierten Messstrahls 7 gemessen werden. Alle solche Ei gen-, Träger-, Impuls- oder Modulationsfrequenzen werden unter dem hier verwendeten Begriff der "Empfangsfrequenz" des Messstrahls 7 verstanden, d.h. der Begriff Empfangsfrequenz umfasst jedwede durch einen Dopplereffekt beeinflussbare Frequenz des Messstrahls 7.

Grundsätzlich ist auch die Natur des Messstrahls 7 selbst beliebig, solange es sich um eine elektromagnetische Welle handelt, sei es sichtbares Licht oder Infrarotlicht wie bei einem Lidargerät oder Radiowellen (Funkwellen), insbesondere Mikrowellen, bei einem Radargerät.

Der Messstrahl 7 ist stark gebündelt, sodass sein Auftreffpunkt 7' auf der Karosserie 5 bzw. dem Rad 4 einen äußerst geringen Durchmesser im Bereich von einigen Zentimetern, bevorzugt < 2 cm, hat. Je nach Entfernung des Geräts 6 von der Fahrbahn 2 sind dazu bestimmte Anforderungen an die Bündelung des Messstrahls 7 zu stellen: Im Idealfall ist der Messstrahl 7 ein Bündel nahezu paralleler Licht- bzw. Radarstrahlen, wie es bevorzugt mit einem Laser erhalten werden kann. Doch auch bei einem Radar-Messstrahl lässt sich eine entsprechende Bündelung erreichen, indem Radarwellen sehr hoher Frequenz, bevorzugt über 70 GHz, verwendet werden, welche annähernd Lichteigenschaften haben und sich wie Licht bündeln lassen, z.B. durch Radarlinsen. Auch der Einsatz von Richtantennen, z.B. Antennenarrays und Patchantennen mit möglichst paralleler, kleindurchmessriger Abstrahlcharakteristik erzeugt einen entsprechenden Radar-Messstrahl. Besonders geeignet sind hierfür Radargeräte aus dem Automobilbereich, wie sie z.B. in Fahrzeugen als Kollisions- und Abstandswarngeräte eingebaut werden. Solche gebündelten Messstrahlen 7 haben eine Bündelung bzw. einen Divergenz- oder Auffächerungsbereich (Öffnungswinkel) von weniger als 1° (entspricht einem Raumwinkel von weniger als ca. 0,00024 sr).

Fig. 2 zeigt die Abtastverläufe eines derart gebündelten Messstrahls 7, der im wesentlichen punktförmig auf das Fahrzeug 1 bzw. dessen Räder 4 auftrifft, während der Vorbeifahrt (Passage) des Fahrzeugs 1 an der Vorrichtung 9. Zu Erläuterungszwecken sind beispielhaft sechs unterschiedliche Abtastverläufe H1 bis H6 gezeigt; es versteht sich, dass durch einen gebündelten Messstrahl 7 bei einer Fahrzeugpassage jeweils nur ein einziger Abtastverlauf H1 - H6 auftritt.

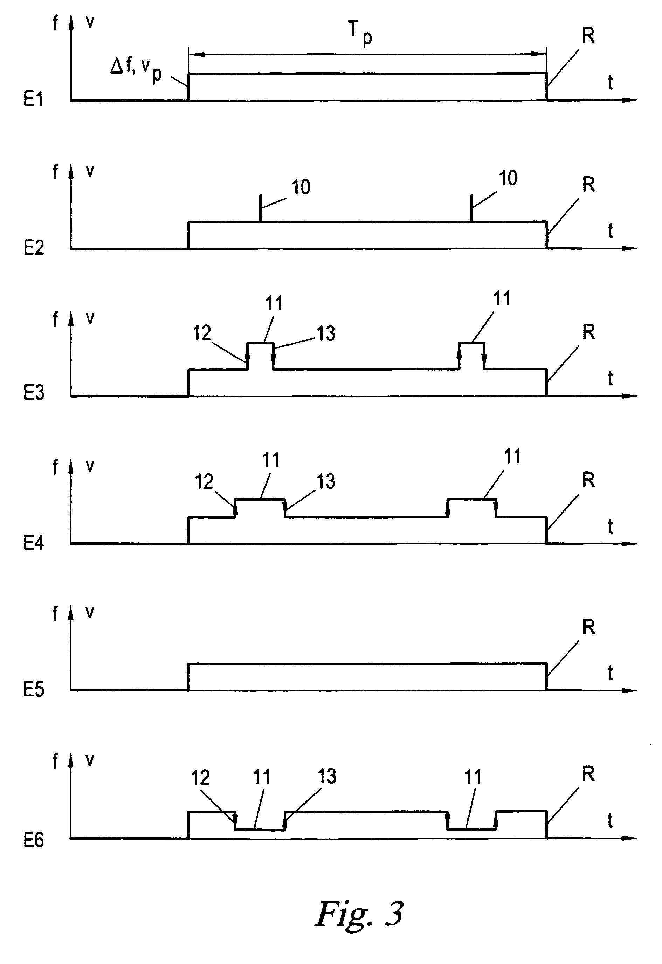

Fig. 3 zeigt die zu den Abtastverläufen H1 - H6 vom Lidar/Radar-Gerät 6 fortlaufend erfasste Empfangsfrequenz f des reflektierten Messstrahls 7 über der Zeit. Die Dopplerverschiebung $\Delta f$ der Empfangsfrequenz f gegenüber der Sendefrequenz ist proportional zur Geschwindigkeitskomponente $v_p$ der jeweils abgetasteten Teile des Fahrzeugs 1 bzw. Rades 4. Die in Fig. 3 dargestellten Empfangsfrequenzverläufe E1 - E6 sind daher gleichbedeutend mit Geschwindigkeitsverläufen.

Aus dem Empfangsfrequenzverlauf E1 von Fig. 3 ist ersichtlich, dass beim Abtastverlauf H1, welcher die Karosserie 5 des Fahrzeugs 1 außerhalb der Räder 4 trifft, während Dauer $T_p$ der Karossieriepassage eine weitgehend konstante Empfangsfrequenzverschiebung $\Delta f$ des Messstrahls 7 und damit Geschwindigkeitskomponente $v_p$ gemessen wird, welche sich als Rechteckimpuls R im Empfangsfrequenzverlauf äußert.

Für den Abtastverlauf H2, welcher die Räder 4 an ihrer obersten Stelle berührt, wo ihre Tangentialgeschwindigkeit $v_t$ sich zur Fahrzeuggeschwindigkeit v addiert, zeigt der Empfangsfrequenzverlauf E2 für jedes Rad 4 eine Spitze ("peak") 10 von 2vp über dem Karosserie-Rechteckimpulses R.

Wenn der Messstrahl 7 die Räder 4 auf einer Höhe zwischen der Radachse und der Radoberseite schneidet, wie bei den Abtastverläufen an H3 und H4, wird bei der Passage eines Rades 4 entsprechend der Projektion $v_p$ seiner Tangentialgeschwindigkeit $v_t$ auf die Messstrahlrichtung eine sich gegenüber dem Karosserie-Impuls R nochmals sprunghaft verändernde Dopplerverschiebung und damit Empfangsfrequenz bzw. Geschwindigkeit gemessen, wie durch die Rechteck-Impulse 11 der Verläufe E3 und E4 veranschaulicht. Jeder Impuls 11 umfasst jeweils eine ansteigende Flanke 12 und eine darauffolgende abfallende Flanke 13, d.h. zwei aufeinanderfolgende abwechselnde Frequenz-"Sprünge".

Aus der Detektion eines Rechteckimpulses 11, der innerhalb des Zeitraums $T_p$ der Passage der Fahrzeugkarosserie 5, d.h. während des Karosserie-Impulses R auftritt, kann somit jeweils das Auftreten eines Rades 4 erkannt bzw. detektiert werden. Die Rad-Impulse 11 sind den Karosserie-Impulsen R superponiert und nur dann, wenn sie während der Dauer $T_p$ der Karosserie-Impulse R auftreten, zeigen sie ein Rad an. Als besonders einfaches Detektionskriterium für einen Rad-Rechteckimpuls 11 können zwei aufeinanderfolgende in abwechselnder Richtung auftretende Flanken bzw. Sprünge 12, 13 detektiert werden, zwischen denen eine im Wesentlichen konstante Frequenz herrscht.

Der Empfangsfrequenzverlauf E5 zeigt den Sonderfall, dass der Messstrahl 7 die Räder 4 genau auf Höhe ihrer Achse trifft, wo keine in Richtung des Messstrahls 7 projizierbare Tangentialgeschwindigkeit des Rades vorhanden ist, sodass die Räder 4 nicht detektierbar sind. Diese Situation sollte vermieden werden.

Der Empfangsfrequenzverlauf E6 tastet die Räder 4 auf einer Höhe zwischen ihrer Unterseite und ihrer Achse ab und ähnelt jenem von E4, nur mit umgekehrten Änderungen 11 - 13. Auch diese Situation sollte durch entsprechende Wahl der Abtasthöhe vermieden werden, da hier nicht mehr in jedem Fall sichergestellt ist, dass auch die Karosserie 5 abgetastet wird, d.h. der Karosserie-Impuls R auftritt.

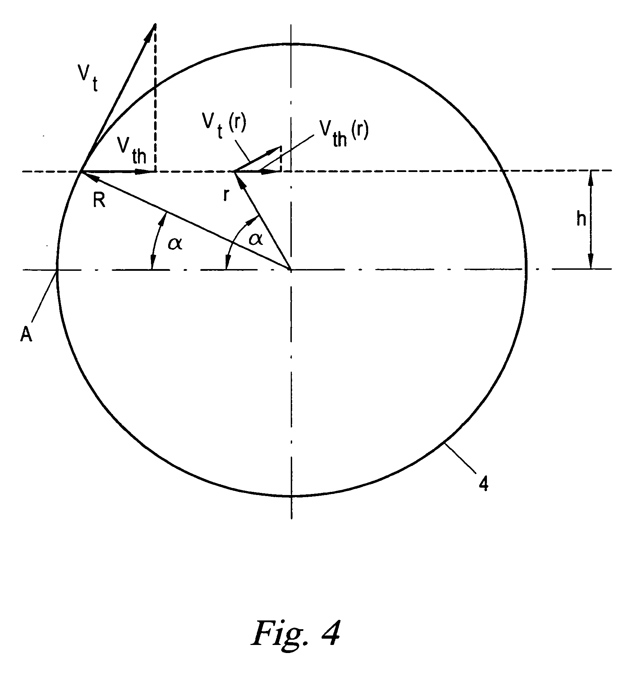

Fig. 4 zeigt analytisch das Ausmaß des Versatzes 11 bei der Passage eines Rades 4 in Abhängigkeit der Höhe h des jeweiligen Abtastverlaufes H1 bis H6 gegenüber der Radachse A, beispielsweise am Abtastverlauf H4. Sei R der Radius des Rades 4 und r ein beliebiger Radius innerhalb des Rades 4, dann ist die Tangentialgeschwindigkeit $v_t(r)$ auf einem Radius r proportional diesem Radius r, u.zw. gemäß

$$v_t(r) = \frac{r}{R} v_t \qquad\qquad (1)$$

Die in Fahrtrichtung 3 liegende Horizontalkomponente $v_{th}(r)$ der Tangentialgeschwindigkeit $v_t(r)$ unter einem Winkel $\alpha$ ist eine Sinus-Projektion entsprechend

$$v_{th}(r) = \frac{r}{R} v_t \sin\alpha \qquad\qquad (2)$$

Mit

$$\sin \alpha = \frac{h}{r} \qquad\qquad (3)$$

ergibt sich die Tangentialgeschwindigkeits-Horizontalkomponente $v_{th}(r)$ damit zu

$$v_{th}(r) = v_t \frac{h}{R} \qquad\qquad (4)$$

Die Tangentialgeschwindigkeits-Horizontalkomponente $v_{th}(r)$ ist somit direkt proportional der jeweils betrachteten Höhe h des Abtastverlaufs und - während das Rad 4 abgetastet wird - über diese Höhe h konstant.

Die Breite des Impulses 11 entspricht der Schnittbreite des Rades 4 auf Höhe h des jeweiligen Abtastverlaufs, und die Höhe des Impulses 11 ist direkt proportional der Höhe h.

Bislang wurde davon ausgegangen, dass die Sendefrequenz des Radar/Lidar-Geräts 6 bzw. Messstrahls 7 konstant ist, d.h. ihr zeitlicher Verlauf ein konstanter Verlauf ist. Es ist jedoch auch möglich, dass das Gerät 6 einen Messstrahl 7 mit einem zeitlich nicht-konstanten Sendefrequenzverlauf aussendet, beispielsweise im Falle von Frequency-Hopping-Verfahren, bei denen die Frequenz ständig - nach einem vorgegebenen bzw. bekannten Muster - wechselt. Die aufgezeichneten Empfangsfrequenzverläufe E1 - E6 werden relativ zu dem vorbekannten zeitlichen Verlauf der Sendefrequenz des Messstrahls 7 - sei er konstant oder wechselnd - aufgezeichnet, d.h. auf diesen referenziert bzw. normiert, so dass der Effekt von bekannten Sendefrequenzverläufen kompensiert werden kann.

Die Erfindung ist demgemäß nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Detektion von Rädern (4) eines Fahrzeugs (1), das auf einer Fahrbahn (2) in einer Fahrtrichtung fährt und dessen Räder (4) von der Fahrzeugkarosserie (5) nach unten vorragen und auf Höhe der Fahrzeugkarosserie (5) zumindest teilweise seitlich freiliegen, **gekennzeichnet durch** die Schritte:

   Aussenden eines gebündelten elektromagnetischen Messstrahls (7) mit einem bekannten zeitlichen Verlauf seiner Frequenz von der Seite der Fahrbahn (2) her auf einen Bereich vorgegebener Höhe über der Fahrbahn (2) und schräg zur Fahrtrichtung (3), wobei der Messstrahl (7) so gebündelt ist, dass sein Öffnungswinkel < 1° ist oder sein Auftreffbereich (7') auf dem Fahrzeug (1) einen maximalen Durchmesser < 5 cm, bevorzugt < 2 cm, hat,
   Empfangen des von einem passierenden Fahrzeug (1) reflektierten Messstrahls (7) und Aufzeichnen des zeitlichen Verlaufs seiner Frequenz relativ zum bekannten Verlauf, und
   Detektieren eines innerhalb des Zeitraums ($T_p$) der Passage der Fahrzeugkarosserie (5) auftretenden Rechteckimpulses (11) im aufgezeichneten Verlauf als Rad (4).

2. Verfahren nach Anspruch 1, **dadurch gekennzeichnet, dass** der Messstrahl (7) ein Radarstrahl im Frequenzbereich über 70 GHz ist, der mit Hilfe einer Richtantenne gebündelt wird.

3. Verfahren nach Anspruch 1, **dadurch gekennzeichnet, dass** der Messstrahl (7) ein Laserstrahl ist.

4. Verfahren nach einem der Ansprüche 1 bis 3, **dadurch gekennzeichnet, dass** der Rechteckimpuls (11) durch Detektieren zweier aufeinanderfolgender abwechselnder Frequenzsprünge (12, 13), zwischen denen eine im wesentlichen konstante Frequenz herrscht, detektiert wird.

5. Vorrichtung zur Detektion von Rädern (4) eines Fahrzeugs (1), das auf einer Fahrbahn (2) in einer Fahrtrichtung (3) fährt und dessen Räder (4) von der Fahrzeugkarosserie (5) nach unten vorragen und auf Höhe der Fahrzeugkarosserie (5) zumindest teilweise seitlich freiliegen, **gekennzeichnet durch** ein Doppler-Lidar- oder -Radargerät (6), das einen gebündelten elektromagnetischen Messstrahl (7) mit einem bekannten zeitlichen Verlauf seiner Frequenz auf ein Ziel aussendet und den zeitlichen Verlauf der Frequenz des vom Ziel reflektierten Messstrahls (7) relativ zum bekannten Verlauf aufzeichnet,

wobei der Messstrahl (7) von der Seite der Fahrbahn (2) her auf einen Bereich vorgegebener Höhe über der Fahrbahn (2) und schräg zur Fahrtrichtung (3) orientiert ist und so gebündelt ist, dass sein Öffnungswinkel < 1° ist oder sein Auftreffbereich (7') auf dem Fahrzeug (1) einen maximalen Durchmesser < 5 cm, bevorzugt < 2 cm, hat, und eine nachgeordnete Auswerteeinrichtung (8), welche einen innerhalb des Zeitraums ($T_p$) der Passage einer Fahrzeugkarosserie (5) auftretenden Rechteckimpuls (11) im aufgezeichneten Verlauf als Rad (4) detektiert.

6. Vorrichtung nach Anspruch 5 mit einem Doppler-Radargerät (6), dessen Messstrahl (7) ein Radarstrahl im Frequenzbereich über 70 GHz ist und das eine Richtantenne zur Bündelung des Radarstrahls besitzt.

7. Vorrichtung nach Anspruch 5 mit einem Doppler-Lidargerät (6), dessen Messstrahl (7) ein Laserstrahl ist.

8. Vorrichtung nach einem der Ansprüche 5 bis 7, **dadurch gekennzeichnet, dass** die Auswerteeinrichtung (8) den Rechteckimpuls (11) anhand zweier aufeinanderfolgender abwechselnder Frequenzsprünge (12, 13), zwischen denen eine im wesentlichen konstante Frequenz herrscht, detektiert.

## Claims

1. A method for detecting the wheels (4) of a vehicle (1) that is traveling on a roadway (2) in a travel direction and whose wheels (4) project downward from the vehicle body (5) and are at least partially exposed laterally at the level of the vehicle body (5), **characterized by** the steps:

   emitting a concentrated electromagnetic measurement beam (7) with a known temporal progression of frequency from the side of the roadway (2) onto an area a predetermined distance above the roadway (2) and at a slant with respect to the travel direction (3), wherein the measurement beam (7) is concentrated in such a way, that its angle of aperture is < 1° or its point of incidence (7') on the vehicle (1) has a maximum diameter < 5 cm, preferably < 2 cm,
   receiving the measurement beam (7) reflected by a passing vehicle (1) and recording the temporal progression, relative to the known progression, of its frequency, and
   detecting a rectangular pulse (11) occurring in the recorded progression within the time period ($T_p$) when the vehicle body (5) passes, as a wheel (4).

2. The method according to Claim 1, **characterized in that** the measurement beam (7) is a radar beam in the frequency range above 70 GHz that is concentrated by a directional antenna.

3. The method according to Claim 1, **characterized in that** the measurement beam (7) is a laser beam.

4. The method according to any one of Claims 1-3, **characterized in that** the rectangular pulse (11) is detected by detecting two successive alternating frequency steps (12, 13), between which there is a substantially constant frequency.

5. An apparatus for detecting wheels (4) of a vehicle (1) that is traveling on a roadway (2) in a travel direction (3) and whose wheels (4) project downward from the vehicle body (5) and are at least partially exposed laterally at the level of the vehicle body (5), **characterized by**:

   a Doppler lidar or radar device (6) that emits a concentrated electromagnetic measurement beam (7) with a known temporal progression of frequency onto a target and records the temporal progression, relative to the known progression, of the frequency of the measurement beam (7) reflected by the target,
   wherein the measurement beam (7) is oriented from the side of the roadway (2) onto an area a predetermined distance above the roadway (2) and is slanted with respect to the direction of travel (3) and is concentrated in such a way, that its angle of aperture is < 1° or its point of incidence (7') on the vehicle (1) has a maximum diameter < 5 cm, preferably < 2 cm, and
   a downstream evaluation unit (8) that detects a rectangular pulse (11) occurring in the recorded progression within the time period ($T_p$) when the vehicle body (5) passes, as a wheel (4).

6. The apparatus according to Claim 5 with a Doppler radar device (6), whose measurement beam (7) is a radar beam in the frequency range above 70 GHz, and which has a directional antenna for concentrating the radar beam.

7. The apparatus according to Claim 5, with a Doppler lidar device (6) whose measurement beam (7) is a laser beam.

8. The apparatus according to any one of Claims 5-7, **characterized in that** the evaluation unit (8) detects the rectangular pulse (11) based on two successive alternating frequency steps (12, 13), between which there is a substantially constant frequency.

**Revendications**

1. Procédé destiné à la détection de roues (4) d'un véhicule (1) qui roule sur une chaussée (2) dans un sens de circulation et dont les roues (4) dépassent vers le bas de la carrosserie de véhicule (5) et sont au moins en partie découvertes sur le côté à la hauteur de la carrosserie du véhicule (5), **caractérisé par** les étapes:

   émission d'un faisceau de mesure (7) électromagnétique focalisé avec un comportement fréquentiel connu dans le temps depuis le côté de la chaussée (2) sur une zone de hauteur donnée au-dessus de la chaussée (2) et dans une direction oblique par rapport au sens de circulation (3), le faisceau de mesure (7) étant focalisé de sorte que son angle d'ouverture soit < 1° ou sa zone d'incidence (7') sur le véhicule (1) présente un diamètre maximal < 5 cm, de préférence < 2 cm,
   réception du faisceau de mesure (7) réfléchi par un véhicule passant (1) et enregistrement du comportement fréquentiel dans le temps par rapport à son comportement connu, et
   détection d'une impulsion rectangulaire (11) survenant dans la période ($T_p$) du passage de la carrosserie de véhicule (5) dans le comportement enregistrée en tant que roue (4).

2. Procédé selon la revendication 1, **caractérisé en ce que** le faisceau de mesure (7) est un faisceau de radar dans une plage de fréquence supérieure à 70 GHz, qui est focalisé à l'aide d'une antenne directive.

3. Procédé selon la revendication 1, **caractérisé en ce que** le faisceau de mesure (7) est un faisceau laser.

4. Procédé selon l'une quelconque des revendications 1 à 3, **caractérisé en ce que** l'impulsion rectangulaire (11) est détectée par détection de deux sauts de fréquence (12, 13) alternatifs successifs, entre lesquels une fréquence sensiblement constante règne.

5. Dispositif destiné à la détection de roues (4) d'un véhicule (1) qui roule sur une chaussée (2) dans un sens de circulation (3) et dont les roues (4) dépassent vers le bas de la carrosserie de véhicule (5) et sont au moins en partie découvertes sur le côté à la hauteur de la carrosserie du véhicule (5), **caractérisé par**
   un appareil doppler, LIDAR ou radar (6) qui émet un faisceau de mesure (7) électromagnétique focalisé présentant un comportement fréquentiel connu dans le temps sur une cible et enregistre le comportement fréquentiel dans le temps du faisceau de mesure (7) réfléchi par la cible par rapport au comportement connu,
   le faisceau de mesure (7) étant orienté depuis le côté de la chaussée (2) sur une zone de hauteur donnée au-dessus de la chaussée (2) et dans une direction oblique par rapport au sens de circulation (3) et étant focalisé de sorte que son angle d'ouverture soit < 1° ou sa zone d'incidence (7') sur le véhicule (1) présente un diamètre maximal < 5 cm, de préférence < 2 cm, et
   un dispositif d'évaluation (8) monté en aval qui détecte une impulsion rectangulaire (11) survenant dans la période ($T_p$) du passage d'une carrosserie de véhicule (5) dans le comportement enregistré en tant que roue (4).

6. Dispositif selon la revendication 5 avec un appareil doppler, radar (6), dont le faisceau de mesure (7) est un faisceau radar dans la plage de fréquence supérieure à 70 GHz et qui possède une antenne directive pour la focalisation du faisceau radar.

7. Dispositif selon la revendication 5 avec un appareil doppler, LIDAR (6), dont le faisceau de mesure (7) est un faisceau laser.

8. Dispositif selon l'une quelconque des revendications 5 à 7, **caractérisé en ce que** le dispositif d'évaluation (8) détecte l'impulsion rectangulaire (11) à l'aide de deux sauts de fréquence (12, 13) alternatifs successifs, entre lesquels une fréquence sensiblement constante règne.

*Fig. 1*

*Fig. 2*

8

*Fig. 3*

*Fig. 4*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037233 A1